# EUROPEAN PATENT APPLICATION

(11) **EP 4 672 157 A1**
(43) Date of publication of application: **31.12.2025**
(21) Application number: 24759548.1
(22) Date of filing: 05.02.2024
(51) Int. Cl.: G06T 15/02, G06T 7/13

(54) **IMAGE PROCESSING METHOD AND APPARATUS, DEVICE, AND MEDIUM**

(30) Priority: 24.02.2023 CN 202310179296
(71) Applicant: Beijing Zitiao Network Technology Co., Ltd., Beijing 100190 (CN)
(72) Inventor: YUAN, Qi, Beijing 100028 (CN)
(74) Representative: Marks & Clerk LLP
(86) International application number: PCT/CN2024/076061
(87) International publication number: WO 2024/174871

(57) **Abstract**

The present disclosure discloses a method and apparatus for processing an image, a device, and a medium. After the image to be processed is obtained, a coverage area corresponding to a virtual object in the image to be processed is determined, and a coverage edge of the virtual object is determined based on the coverage area and a time variable. Since a degree of coverage of the virtual object in the coverage area and the corresponding coverage edge change over time, the coverage edge of the virtual object needs to be determined based on the coverage area and the time variable. Further, a coverage effect of the virtual object is obtained based on the coverage area and the coverage edge. That is, after the coverage area and the coverage edge are determined, the virtual object is added to the corresponding coverage area. As such, with the technical solutions provided in the present disclosure, the addition of the coverage effect of the virtual object in the image to be processed has no need for a lidar to construct a three-dimensional space of a scene in the image to be processed, and the entire processing process is performed on a two-dimensional plane, thereby reducing computation and improving convenience.

## Description

The present application claims priority to Chinese Patent Application No. 202310179296.7, filed with the China National Intellectual Property Administration on February 24, 2023 and entitled "IMAGE PROCESSING METHOD AND APPARATUS, DEVICE, AND MEDIUM", which is incorporated herein by reference in its entirety.

### FIELD

The present disclosure relates to the field of computer technologies, and in particular, to an image processing method and apparatus, a device, and a medium.

### BACKGROUND

With the continuous development of image processing technologies, different effects may be added in images to increase the diversity of image processing and meet the needs of different users. For example, effects with a sense of spatial reality, such as snow buildup, catkins, and fallen flowers, may be added to special effect props and AR scenes. However, currently in image processing, in order to achieve a good real-space effect, a device such as a lidar is required, to assist in obtaining spatial three-dimensional information of the images, which is costly, and computationally complex and time-consuming.

### SUMMARY

In view of this, the present disclosure provides a method and apparatus for processing an image, a device, and a medium, which add a coverage effect of a virtual object in an image, without requiring a device such as a lidar to reconstruct a three-dimensional space, improving the convenience of image processing.

In order to achieve the above objective, the present disclosure provides the following technical solutions.

According to a first aspect of the present disclosure, a method for processing an image is provided. The method includes:
obtaining an image to be processed;
determining a coverage area of a virtual object based on the image to be processed;
determining a coverage edge of the virtual object based on the coverage area and a time variable; and
obtaining a coverage effect of the virtual object based on the coverage area and the coverage edge.

According to a second aspect of the present disclosure, an apparatus for processing an image is provided. The apparatus includes:
a first obtaining unit configured to obtain an image to be processed;
a determining unit configured to determine a coverage area of a virtual object based on the image to be processed,
the determining unit being further configured to determine a coverage edge of the virtual object based on the coverage area and a time variable; and
a second obtaining unit configured to obtain a coverage effect of the virtual object based on the coverage area and the coverage edge.

According to a third aspect of the present disclosure, an electronic device is provided. The device includes: a processor and a memory, where
the memory is configured to store instructions or a computer program; and
the processor is configured to execute the instructions or the computer program in the memory, to cause the electronic device to perform the method according to the first aspect.

According to a fourth aspect of the present disclosure, a computer-readable storage medium having instructions stored therein is provided. The instructions, when executed on a device, cause the device to perform the method according to the first aspect.

According to a fifth aspect of the present disclosure, a computer program product is provided. The computer program product includes a computer program/instructions. The computer program/instructions, when executed by a processor, cause the method according to the first aspect to be implemented.

It can be seen that the present disclosure has the following beneficial effects.

In the present disclosure, after the image to be processed is obtained, the coverage area corresponding to the virtual object in the image to be processed is determined, and the coverage edge of the virtual object is determined based on the coverage area and the time variable. Since a degree of coverage of the virtual object in the coverage area and the corresponding coverage edge change over time, the coverage edge of the virtual object needs to be determined based on the coverage area and the time variable. Further, the coverage effect of the virtual object is obtained based on the coverage area and the coverage edge. That is, after the coverage area and the coverage edge are determined, the virtual object is added to the corresponding coverage area. As such, with the technical solutions provided in the present disclosure, the addition of the coverage effect of the virtual object in the image to be processed has no need for a laser radar to construct a three-dimensional space of a scene in the image to be processed, and the entire processing process is performed on a two-dimensional plane, thereby reducing computation and improving convenience.

### BRIEF DESCRIPTION OF THE DRAWINGS

In order to more clearly describe the technical solutions in the embodiments of the present disclosure or in the prior art, the accompanying drawings for describing the embodiments or the prior art will be briefly described below. Apparently, the accompanying drawings in the description below show merely some embodiments recited in the present disclosure, and those of ordinary skill in the art may still derive other accompanying drawings from these accompanying drawings without any creative efforts.
FIG. 1 is a flowchart of an image processing method according to an embodiment of the present disclosure;
FIG. 2a is an image to be processed according to an embodiment of the present disclosure;
FIG. 2b is a scene normal map according to an embodiment of the present disclosure;
FIG. 2c is a schematic diagram of a coverage edge of snow according to an embodiment of the present disclosure;
FIG. 3a is a scene depth map according to an embodiment of the present disclosure;
FIG. 3b is a schematic diagram of deflection of a scene normal according to an embodiment of the present disclosure;
FIG. 4 is a structural diagram of a snow buildup rendering apparatus according to an embodiment of the present disclosure; and
FIG. 5 is a schematic diagram of a structure of an electronic device according to an embodiment of the present disclosure.

### DETAILED DESCRIPTION OF EMBODIMENTS

In order for persons skilled in the art to better understand the solutions of the present disclosure, the technical solutions in the embodiments of the present disclosure will be described below clearly and completely with reference to the accompanying drawings in the embodiments of the present disclosure. Apparently, the embodiments described are merely some rather than all of the embodiments of the present disclosure. All other embodiments obtained by those of ordinary skill in the art based on the embodiments of the present disclosure without any creative efforts shall fall within the scope of protection of the present disclosure.

Currently, adding effects such as snow buildup, catkins, and fallen flowers in image special effect processing and AR scenes requires a device such as a lidar to obtain spatial three-dimensional information of an image. For example, rendering a snow scene in an image mainly relies on the lidar of a mobile device to reconstruct a three-dimensional spatial mesh and add snow texture to the mesh. This implementation may allow for a good reconstruction of an environment in a three-dimensional space, but requires hardware support of the lidar, resulting in low coverage. In addition, when the snow scene is rendered in a real-time interactive scenario, if the scenario is of high complexity, for example, including many objects, it takes a long time to build the three-dimensional spatial mesh.

Based on this, the present disclosure discloses an image processing method. After an image to be processed is obtained, a coverage area corresponding to a virtual object in the image to be processed is determined, and a coverage edge corresponding to the virtual object is determined based on the coverage area and a time variable. Since a degree of coverage of the virtual object changes over time, the coverage edge of the virtual object needs to be determined based on the coverage area and the time variable. After the coverage area and the coverage edge are determined, a coverage effect of the virtual object is added in the image to be processed based on the coverage area and the coverage edge. As such, the addition of the coverage effect of the virtual object in the image to be processed has no need for construction of the 3D spatial mesh for the scene in the image to be processed, and can be achieved on a two-dimensional screen, thereby reducing processing complexity and improving convenience.

It can be understood that before the use of the technical solutions in the embodiments of the present disclosure, the user shall be informed of the type, range of use, use scenarios, etc., of personal information involved in an appropriate manner in accordance with the relevant laws and regulations, and the authorization of the user shall be obtained.

For example, in response to reception of an active request from a user, prompt information is sent to the user to clearly inform the user that the requested operation will require access to and use of personal information of the user. As such, the user can independently choose, based on the prompt information, whether to provide the personal information to software or hardware, such as an electronic device, an application, a server, or a storage medium, that performs the operations of the technical solutions of the present disclosure.

As an optional but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above process of notifying and obtaining user authorization is only illustrative and does not constitute a limitation on the implementations of the disclosure, and other manners that satisfy the relevant laws and regulations may also be applied in the implementations of the disclosure.

To facilitate an understanding of the technical solutions provided in the present disclosure, description is provided below with reference to the accompanying drawings.

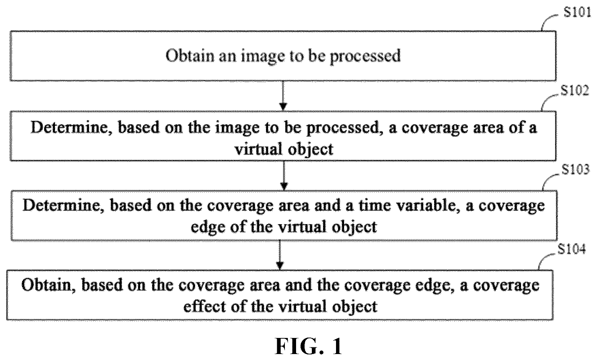

Reference is made to FIG. 1, which is a flowchart of an image processing method according to the present disclosure. As shown in FIG. 1, the method may be performed by an image processing client, which may be incorporated in an electronic device. The electronic device may include a device with a communication function, for example, a mobile phone, a tablet computer, a notebook computer, a desktop computer, a vehicle-mounted terminal, a wearable electronic device, an all-in-one machine, and a smart home device, or may be a device simulated by a virtual machine or a simulator. As shown in FIG. 1, the method may include the following steps.

S101: Obtain an image to be processed.

In this embodiment, the image to be processed is first obtained, where the image to be processed is an image to which a coverage effect of a virtual object needs to be added. The image to be processed may be an image captured in advance, or an image captured in real time by a user using the image processing client.

S102: Determine a coverage area of the virtual object based on the image to be processed.

After the image to be processed is obtained, since different images to be processed may include different scenes, and in different scenes, corresponding areas, to which the virtual object is added, are different, the coverage area corresponding to the virtual object is determined based on the image to be processed. The virtual object is an object added in the image to be processed, which may be, for example, snow, leaves, catkins, etc. The user may use the image processing client to select the virtual object to be added.

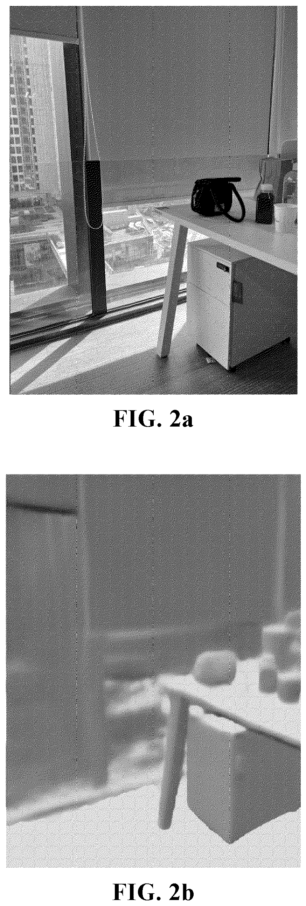

In some embodiments, the coverage area of the virtual object may be determined by obtaining a scene normal map based on the image to be processed and obtaining a motion direction vector of the virtual object; and determining the coverage area of the virtual object based on the scene normal map and the motion direction vector. Specifically, the image to be processed is transformed to obtain the scene normal map corresponding to the image to be processed. For example, FIG. 2a shows an image to be processed, and FIG. 2b is a scene normal map corresponding to the image to be processed.

Where, after the scene normal map and the motion direction of the virtual object are obtained, the coverage area of the virtual object may be determined by sampling the scene normal map based on pixel coordinates of the image to be processed, to obtain a pixel normal vector; obtaining a coverage value based on the pixel normal vector and the motion direction vector of the virtual object; and determining the coverage area of the virtual object based on the coverage value. That is, the pixel normal vector is first obtained from the scene normal map, the coverage value is obtained by performing a calculation on the pixel normal vector and the motion direction vector, and the coverage area of the virtual object is determined based on a magnitude of the coverage value.

Where, the motion direction of the virtual object may be pre-configured. Alternatively, the image processing client may use, as the motion direction of the virtual object, a gravity direction obtained by a gravity sensor of the electronic device into which the image processing client is incorporated.

In some embodiments, the pixel normal vector and the motion direction vector may be point multiplied to obtain a point multiplication result, which is the coverage value. If the point multiplication result is greater than a preset threshold, it is determined that a pixel corresponding to the pixel normal vector needs to be covered; or if the point multiplication result is less than or equal to the preset threshold, it is determined that a pixel corresponding to the pixel normal vector does not need to be covered. The preset threshold may be set according to an actual situation. For example, the preset threshold is 0.

S103: Determine a coverage edge of the virtual object based on the coverage area and a time variable.

After the coverage area is determined, since a degree of coverage of the virtual object in the coverage area and the corresponding coverage edge change over time, the coverage edge of the virtual object needs to be determined based on the coverage area and the time variable. For example, a snowing effect is added in the image to be processed. As time passed, snow grows out of nothing and then builds up from a little to a lot. As a coverage thickness of the snow changes, a coverage edge of the snow also changes.

In some embodiments, the coverage edge of the virtual object may be determined by obtaining an edge texture vector based on an edge of the coverage area; determining edge information based on the edge texture vector and the time variable; and determining the coverage edge of the virtual object based on the edge information. That is, the edge texture vector corresponding to the coverage area is obtained, and further, the new edge information is determined based on the edge texture vector and the time variable, to determine the coverage edge of the virtual object based on the edge information.

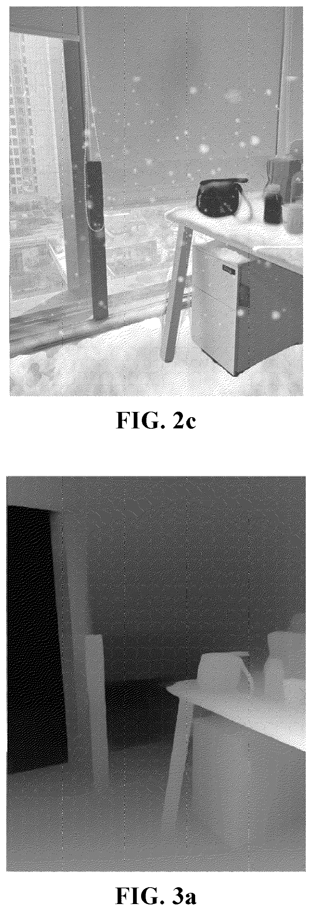

Where, the edge information may be determined based on the edge texture vector and the time variable by determining a coverage thickness of the virtual object based on the time variable and a motion speed of the virtual object; and determining the edge information based on the edge texture vector and the coverage thickness. For example, in the application scenario shown in FIG. 2a, a determined coverage area of a virtual object includes a table top area, and an edge of the coverage area is an edge of the table top. As snow buildup increases, as shown in FIG. 2c, a coverage edge of the snow changes, and is more rounded than the edge of the table top.

S104: Obtain the coverage effect of the virtual object based on the coverage area and the coverage edge.

After the coverage area and the coverage edge corresponding to the virtual object are obtained, the coverage effect of the virtual object is added to the coverage area. A corresponding edge of the virtual object in the image to be processed is determined by the coverage edge which is determined in step S103.

Where, during rendering of the virtual object in the image to be processed, a texture map of the virtual object may be sampled to obtain shading data of the virtual object, and then, the shading data is rendered into the image to be processed. The texture map of the virtual object may include a base color map, a normal map, a metallic, roughness and ambient occlusion (MRAO) mix map, etc. The obtained shading data include base colors, normal vectors, metallic, roughness, ambient occlusion intensities, etc.

In some embodiments, the coverage effect of the virtual object may be added in the image to be processed by updating the coverage area based on the coverage edge, to obtain an updated coverage area; and rendering the virtual object in the updated coverage area. That is, as time passed, the coverage thickness of the virtual object changes, and the corresponding coverage area of the virtual object in the image to be processed also changes, such that the coverage area needs to be re-determined, to add the coverage effect of the virtual object to the new coverage area. For example, a coverage effect of the snow buildup is added in the application scenario shown in FIG. 2a. As the snow buildup increases, the snow buildup may have a tapered shape, and the coverage area of the snow is decreasing during formation of the tapered shape.

In some embodiments, the image to be processed may be further processed to add more effects, thereby improving the sense of reality. Specifically, a scene depth map is obtained based on an image to be processed; and the image to be processed is processed based on the scene depth map, to obtain an overlay effect. The overlay effect may be determined based on the virtual object, for example, may be a fog effect or a moisture effect. Specifically, the image to be processed is transformed to obtain the scene depth map, and interpolation processing is performed on the image to be processed by using depth values in the scene depth map, to obtain the overlay effect. For example, the image to be processed shown in FIG. 2a is transformed to obtain a scene depth map shown in FIG. 3a.

In general, after the image to be processed is transformed, depths in the scene depth map are non-linear, that is, depth precision is high near a camera and low far from the camera. In order to avoid an impact on the overlay effect due to variations in depth precision, a first distance and a second distance are first obtained based on the scene depth map; the depth values in the scene depth map are corrected by using the first distance and second distance, to obtain a corrected scene depth map; and the image to be processed is processed by using the corrected scene depth map, to obtain the overlay effect. The first distance is a distance between a near plane corresponding to a camera apparatus and the camera apparatus, and the second distance is a distance between a far plane corresponding to the camera apparatus and the camera apparatus. The camera apparatus is used to obtain the image to be processed.

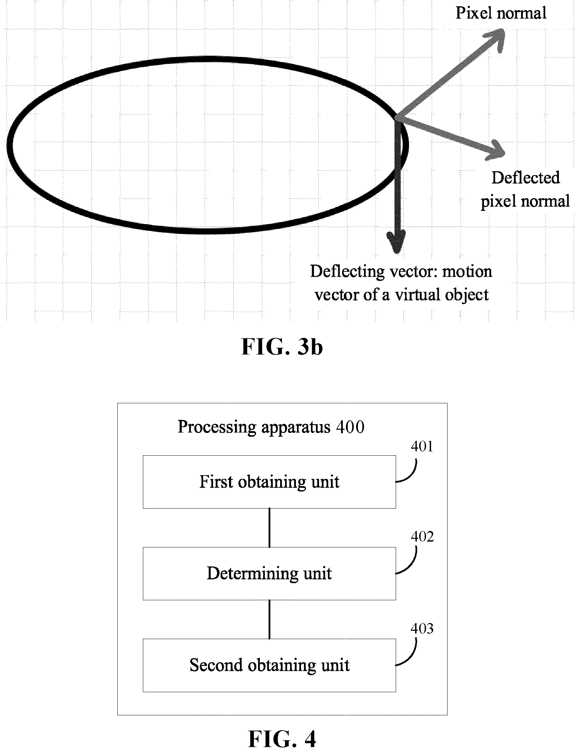

In some embodiments, to highlight the coverage thickness of the virtual object, normal deflection can be used to increase shadow of the edge and improve the sense of thickness of the edge. Specifically, the pixel normal vector of the coverage edge is deflected based on the motion direction of the virtual object, to increasing the shadow of the coverage edge. For example, as shown in FIG. 3b, a motion vector of a virtual object is downward, and therefore, a pixel normal of a coverage edge is deflected down.

It can be seen that, after the image to be processed is obtained, the coverage area corresponding to the virtual object in the image to be processed is determined, and the coverage edge of the virtual object is determined based on the coverage area and the time variable. Since a degree of coverage of the virtual object in the coverage area and the corresponding coverage edge change over time, the coverage edge of the virtual object needs to be determined based on the coverage area and the time variable. Further, the coverage effect of the virtual object is obtained based on the coverage area and the coverage edge. That is, after the coverage area and the coverage edge are determined, the virtual object is added to the corresponding coverage area. As such, with the technical solutions provided in the present disclosure, the addition of the coverage effect of the virtual object in the image to be processed has no need for the laser radar to construct the three-dimensional space of the scene in the image to be processed, and the entire processing process is performed on a two-dimensional plane, thereby reducing computation and improving convenience.

Based on the above method embodiment, the embodiments of the present disclosure provide a snow buildup rendering apparatus and an electronic device, which will be described below in conjunction with the accompanying drawings.

Reference is made to FIG. 4, which is a structural diagram of an image processing apparatus according to an embodiment of the present disclosure. As shown in FIG. 4, the apparatus may include a first obtaining unit 401, a determining unit 402, and a second obtaining unit 403.

The first image obtaining unit 401 is configured to obtain an image to be processed.

The determining unit 402 is configured to determine a coverage area of a virtual object based on the image to be processed.

The determining unit 402 is further configured to determine a coverage edge of the virtual object based on the coverage area and a time variable.

The second obtaining unit 403 is configured to obtain a coverage effect of the virtual object based on the coverage area and the coverage edge.

In some embodiments, the determining unit 402 is specifically configured to obtain a scene normal map based on the image to be processed and obtain a motion direction vector of the virtual object, and determine the coverage area of the virtual object based on the scene normal map and the motion direction vector.

In some embodiments, the determining unit 402 is specifically configured to sample the scene normal map based on pixel coordinates of the image to be processed, to obtain a pixel normal vector, obtain a coverage value based on the pixel normal vector and the motion direction vector of the virtual object, and determine the coverage area of the virtual object based on the coverage value.

In some embodiments, the determining unit 402 is specifically configured to obtain an edge texture vector based on an edge of the coverage area, determine edge information based on the edge texture vector and the time variable, and determine the coverage edge of the virtual object based on the edge information.

In some embodiments, the determining unit 402 is specifically configured to determine a coverage thickness of the virtual object based on the time variable and a motion speed of the virtual object, and determine the edge information based on the edge texture vector and the coverage thickness.

In some embodiments, the second obtaining unit 403 is specifically configured to update the coverage area based on the coverage edge, to obtain an updated coverage area, and render the virtual object in the updated coverage area.

In some embodiments, the second obtaining unit 403 is further configured to obtain a scene depth map based on the image to be processed, and process the image to be processed based on the scene depth map, to obtain an overlay effect.

In some embodiments, the second obtaining unit 403 is specifically configured to obtain a first distance and a second distance based on the scene depth map, correct depth values in the scene depth map by using the first distance and second distance, to obtain a corrected scene depth map, and process the image to be processed by using the corrected scene depth map, to obtain the overlay effect.

In some embodiments, the second obtaining unit 403 is further configured to deflect a pixel normal direction vector of the coverage edge by using a motion direction vector of the virtual object, to increase a shadow effect of the coverage edge.

It should be noted that, for specific implementation of the various units in this embodiment, reference may be made to the related description in the above method embodiment. The division into the units in this embodiment of the present disclosure is illustrative and is merely logical function division, and there may be other division methods in actual implementation. Various function units in this embodiment of the present disclosure may be integrated into one processing unit, each of the units may exist alone physically, or two or more units may be integrated into one unit. For example, in the above embodiment, a processing unit and a sending unit may be the same unit or different units. The integrated unit may be implemented in the form of hardware, or may be implemented in the form of a software function unit.

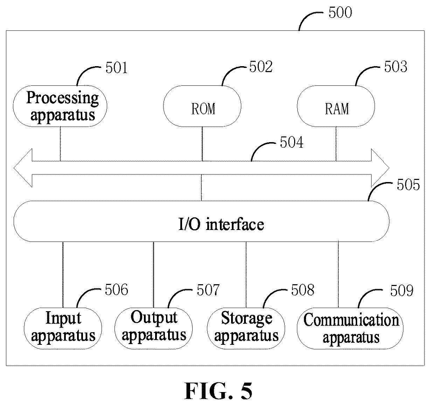

Reference is made to FIG. 5, which is a schematic diagram of a structure of an electronic device 500 suitable for implementing an embodiment of the present disclosure. A terminal device in this embodiment of the disclosure may include, but is not limited to, mobile terminals such as a mobile phone, a notebook computer, a digital broadcast receiver, a personal digital assistant (PDA), a tablet computer (PAD), a portable media player (PMP), and a vehicle-mounted terminal (e.g., a vehicle navigation terminal), and fixed terminals such as a digital TV and a desktop computer. The electronic device shown in FIG. 5 is merely an example, and shall not impose any limitation on the function and scope of use of the embodiments of the present disclosure.

As shown in FIG. 5, the electronic device 500 may include a processing apparatus (such as a central processing unit or a graphics processing unit) 501 that may perform a variety of appropriate actions and processing in accordance with a program stored in a read-only memory (ROM) 502 or a program loaded from a storage apparatus 508 into a random access memory (RAM) 503. The RAM 503 further stores various programs and data required for operations of the electronic device 500. The processing apparatus 501, the ROM 502, and the RAM 503 are connected to one another through a bus 504. An input/output (I/O) interface 505 is also connected to the bus 504.

Generally, the following apparatuses may be connected to the I/O interface 505: an input apparatus 506 including, for example, a touchscreen, a touchpad, a keyboard, a mouse, a camera, a microphone, an accelerometer, and a gyroscope; an output apparatus 507 including, for example, a liquid crystal display (LCD), a speaker, and a vibrator; the storage apparatus 508 including, for example, a tape and a hard disk; and a communication apparatus 509. The communication apparatus 509 may allow the electronic device 500 to perform wireless or wired communication with other devices to exchange data. Although FIG. 5 shows the electronic device 500 having various apparatuses, it should be understood that it is not required to implement or have all of the shown apparatuses. It may be an alternative to implement or have more or fewer apparatuses.

In particular, according to an embodiment of the disclosure, the process described above with reference to the flowchart may be implemented as a computer software program. For example, this embodiment of the disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 509, installed from the storage apparatus 508, or installed from the ROM 502. The computer program, when executed by the processing apparatus 501, causes the above-mentioned functions defined in the method according to the embodiments of the present disclosure to be performed.

The electronic device according to this embodiment of the disclosure and the method according to the above embodiments belong to the same inventive concept. For the technical details not exhaustively described in this embodiment, reference may be made to the above embodiments, and this embodiment and the above embodiments have the same beneficial effects.

An embodiment of the disclosure provides a computer storage medium storing a computer program thereon, where the program, when executed by a processor, implements the method according to the above embodiments.

It should be noted that the above computer-readable medium described in the disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the disclosure, the computer-readable storage medium may be any tangible medium containing or storing a program which may be used by or in combination with an instruction execution system, apparatus, or device. In the disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some embodiments, a client or a server may perform communication by using any currently known or future-developed network protocol such as a hypertext transfer protocol (HTTP), and may interconnect with digital data communication (e.g., a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, enable the electronic device to perform the above method.

Computer program code for performing operations of the disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the disclosure may be implemented by software, or may be implemented by hardware. The name of the unit/module does not constitute a limitation on the unit itself under certain circumstances.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

It should be noted that the various embodiments in this specification are described in a progressive manner, and each embodiment focuses on the differences from other embodiments. The same or similar parts between the various embodiments may be referenced to each other. For the system or apparatus disclosed in this embodiment, since it corresponds to the method disclosed in the embodiments, the description is relatively simple, and for the related parts, reference may be made to the description of the method.

It should be understood that, in the present disclosure, "at least one" means one or more, and "a plurality of" means two or more. The term "and/or" is used to describe an association relationship between associated objects, and indicates that three relationships may exist, for example, A and/or B may indicate that: only A exists, only B exists, and both A and B exist, where A or B may be singular or plural. The character "/" generally indicates an "or" relationship between the associated objects. "At least one of the following" or similar expressions refers to any combination of these items, including any combination of single items or plural items. For example, at least one of a, b, or c may indicate: a, b, and c, "a and b", "a and c", "b and c", or "a and b and c", where a, b, or c may be singular or plural.

It should also be noted that, herein, relative terms such as "first" and "second" are only used to distinguish one entity or operation from another entity or operation, and do not necessarily require or imply that such an actual relationship or order exists between these entities or operations. Moreover, the terms "include", "comprise", or any of their variants are intended to cover a non-exclusive inclusion, so that a process, method, article, or device that includes a list of elements not only includes those elements but also includes other elements that are not expressly listed, or further includes elements inherent to such process, method, article, or device. In the absence of more restrictions, an element defined by "including/comprising a/an ..." does not exclude another identical element in a process, method, article, or device that includes the element.

The steps of the method or algorithm described in conjunction with the embodiments disclosed herein may be implemented directly in hardware, in a software module executed by a processor, or in a combination of the two. The software module may be disposed in a random access memory (RAM), a memory, a read-only memory (ROM), an electrically programmable ROM, an electrically erasable programmable ROM, a register, a hard disk, a removable disk, a CD-ROM, or any other form of storage medium known in the art.

With respect to the above description of the disclosed embodiments, those skilled in the art could implement or use the present disclosure. Various modifications to these embodiments are apparent to those skilled in the art, and the general principle defined herein may be practiced in other embodiments without departing from the spirit or scope of the present disclosure. Therefore, the present disclosure will not be limited to the embodiments shown herein, but extends to the widest scope that complies with the principles and novelty disclosed in this specification.

## Claims

1. A method for processing an image, comprising:
obtaining the image to be processed;
determining, based on the image to be processed, a coverage area of a virtual object;
determining, based on the coverage area and a time variable, a coverage edge of the virtual object; and
obtaining, based on the coverage area and the coverage edge, a coverage effect of the virtual object.

2. The method according to claim 1, wherein the determining the coverage area of the virtual object based on the image to be processed comprises:
obtaining a scene normal map based on the image to be processed and obtaining a motion direction vector of the virtual object; and
determining the coverage area of the virtual object based on the scene normal map and the motion direction vector.

3. The method according to claim 2, wherein the determining the coverage area of the virtual object based on the scene normal map and the motion direction vector comprises:
sampling the scene normal map based on pixel coordinates of the image to be processed, to obtain a pixel normal vector;
obtaining a coverage value based on the pixel normal vector and the motion direction vector of the virtual object; and
determining the coverage area of the virtual object based on the coverage value.

4. The method according to claim 1, wherein the determining the coverage edge of the virtual object based on the coverage area and the time variable comprises:
obtaining an edge texture vector based on an edge of the coverage area;
determining edge information based on the edge texture vector and the time variable; and
determining the coverage edge of the virtual object based on the edge information.

5. The method according to claim 4, wherein the determining edge information based on the edge texture vector and the time variable comprises:
determining a coverage thickness of the virtual object based on the time variable and a motion speed of the virtual object; and
determining the edge information based on the edge texture vector and the coverage thickness.

6. The method according to claim 1, wherein the obtaining the coverage effect of the virtual object based on the coverage area and the coverage edge comprises:
updating the coverage area based on the coverage edge, to obtain an updated coverage area; and
rendering the virtual object in the updated coverage area.

7. The method according to claim 1, further comprising:
obtaining a scene depth map based on the image to be processed; and
processing the image to be processed based on the scene depth map, to obtain an overlay effect.

8. The method according to claim 7, wherein the processing the image to be processed based on the scene depth map, to obtain an overlay effect comprises:
obtaining a first distance and a second distance based on the scene depth map;
correcting depth values in the scene depth map with the first distance and second distance, to obtain a corrected scene depth map; and
processing the image to be processed by using the corrected scene depth map, to obtain the overlay effect.

9. The method according to claim 1, further comprising:
deflecting a pixel normal direction vector of the coverage edge by using a motion direction vector of the virtual object, to increase a shadow effect of the coverage edge.

10. An apparatus for processing an image, comprising:
a first obtaining unit configured to obtain the image to be processed;
a determining unit configured to determine a coverage area of a virtual object based on the image to be processed,
the determining unit being further configured to determine a coverage edge of the virtual object based on the coverage area and a time variable; and
a second obtaining unit configured to obtain a coverage effect of the virtual object based on the coverage area and the coverage edge.

11. An electronic device, comprising:
a processor and a memory,
the memory being configured to store instructions or a computer program, and
the processor being configured to execute the instructions or computer program stored in the memory to cause the electronic device to perform any of claims 1 to 9.

12. A computer-readable storage medium having instructions stored therein, wherein the instructions, when executed on a device, cause the device to perform any of claims 1 to 9.
